# EUROPEAN PATENT APPLICATION

(11) **EP 2 738 822 A1**
(43) Date of publication of application: **04.06.2014**
(21) Application number: 13195491.9
(22) Date of filing: 03.12.2013
(51) Int. Cl.: H01L 31/048, F24J 2/52

(54) **Mounting system for installing a panel, such as a photovoltaic panel, on a building**

(30) Priority: 03.12.2012 NL 2009921
(71) Applicant: SCX Solar B.V., 5712 SN Someren (NL)
(72) Inventor: Jacobs, Antonius Lodevicus Maria, 6003 AD WEERT (NL); Hendrikx, Peter Franciscus Maria, 5711 AH SOMEREN (NL); De Leede, Gerardus Leonardus Antonius, 6002 VZ WEERT (NL)
(74) Representative: Algemeen Octrooi- en Merkenbureau B.V.

(57) **Abstract**

The invention relates to mounting system for installing a panel, such as a photovoltaic panel, on a building. The mounting system comprises an elongate main profile to be fixed to the building and a further elongate main profile to be placed substantially parallel to the main profile with a transverse spacing therebetween. The main profile and the further main profile comprise a support profile part and a further support profile part, which define a panel support surface on which a photovoltaic panel can be placed. The main profile comprises a fixing profile part disposed between the building and the panel support surface, by means of which the main profile can be connected to the building, using a fastening device. The fastening device engages in the fixing profile part and in the building for thus securing the spacing between the main profile and the building.

## Description

The invention relates to a mounting system for installing a photovoltaic panel on a building, the mounting system comprising an elongate main profile to be fixed to the building, which main profile comprises a support profile part that defines a panel support surface on which a photovoltaic panel can be placed.

The invention further relates to a building with a mounting system installed thereon, and also to an assembly for such a mounting system, as well as to a method for installing a photovoltaic panel on a building.

A mounting system of the above kind is known from DE 10 2007 026 819 A1. The known device comprises a profile support which is fixed to a roof of a building by means of a connecting plate and a hanger bolt. A solar panel is placed on the profile support by means of a clamp holder that is screwed to the profile. The hanger bolt comprises an elongate shank body provided with screw thread on a bottom side thereof, via which the fixation to the roof can be effected. At an upper side of the shank body, a screw thread provided with a stop member is present, on which a nut can be screwed, such that the connecting plate can be secured between the stop member and the nut. The connecting plate is in turn secured to a bottom side of the profile support by means of a bolt and nut.

A mounting system comprising a main profile which is directly fixed to the building is known from EP 2 023 402 A1, EP 2 434 230 A1. The orientation of the profile used therein is directly dependent on the orientation of the building, which makes it difficult to have a plurality of side-by-side photovoltaic panels closely abut each other.

Another mounting system is known from EP 2 333 454 A1, in which use is made of a centrally placed bolt with nuts for placing the profile on the building with a desired spacing therebetween. Placement in a desired orientation, for example with a tilt about the longitudinal axis of the main profile, is not possible in that case.

A drawback of the known mounting systems is that fixation of in particular the main profile to a building with the desired spacing therebetween is relatively difficult. After all, a few screw parts and/or nuts must be precisely connected together for said fixation. The space that is available, for example for a hand of the person who installs the mounting system, is relatively small. An additional drawback is the fact that aligning the solar panel, in particular placing it in a desired (angular) orientation, is relatively difficult, or even impossible, when using the known mounting systems.

Accordingly it is an object of the present invention to provide a mounting system of the above kind which makes it easier to install a photovoltaic panel on a building with the desired spacing and a desired alignment.

In order to achieve that object, the invention provides a mounting system according to claim 1. The mounting system according to the invention comprises an elongate main profile to be fixed to the building and a further elongate main profile to be placed substantially parallel to the main profile with a transverse spacing therebetween. The main profile preferably has a substantially constant cross-section along its length, and can be produced in a very simple manner in an extrusion process (although also other production methods are conceivable) from a metal (aluminium or steel) or a plastic. The main profile and the further main profile comprise a support profile part and a further support profile part, respectively, by which is meant that said profile parts are designed for supporting at least a part of one or more photovoltaic panels. The support profile part and the further support profile part define a panel support surface on which the photovoltaic panel or another panel can be placed. In other words, the main profile and the further main profile are designed so that parts of said profile function as a panel support surface on which the photovoltaic panel can be placed, at least in the mounted position of the main profile and the further main profile. The main profile comprises a fixing profile part disposed between the building and the panel support surface in the installed position of the mounting system, by means of which the main profile can be connected to the building or a part thereof, such as an intermediate spacer. The fixing profile part is preferably an integral part of the main profile, and need not be separately connected to the main profile, therefore, as is the case in the prior art. The mounting system further comprises a plurality of fastening devices which are each integrally formed, i.e. in particular in one piece, and which are each designed so that the main profile can be connected to the building in spaced relation therewith. The term "integral" as used here is understood to mean that the fastening devices are integrally formed, in one piece and/or of interconnected parts, in any case just before mounting takes place, and do not consist of loose, separate parts, as is for example the case with a bolt and a nut, so that installing the main profile is easy. Each of the fastening devices is designed for being operable essentially entirely in a direction from the panel support surface, so that installation from the upper side of the profile is possible, so that a good accessibility is ensured. The fastening devices are designed for being directly connectable to the building or to a part thereof. The fastening device is so designed that it will be in direct engagement both with the fixing profile part and with the building. In this way it is possible to place the main profile in a desired orientation, and at a desired height, possibly using one or more supporting blocks, and subsequently connecting each one of the plurality of integral fastening devices to the fixing profile part and the building in one operation. In this way the main profile can be firmly secured to the building in one operation for each fastening device, whilst at the same time the desired spacing between the main profile and the building as well as a desired orientation are realised. Installing the mounting system at a desired height on the building is thus a relatively simple operation. Adjusting the height or changing the orientation after installation is no longer necessary. The object of the present invention is thus achieved.

Very advantageous is moreover the fact that levelling, which is in practically all cases necessary for old buildings, such as livestock buildings etc, and which is very time-consuming, is no longer necessary with the mounting system according to the present invention.

As already said before, operating the fastening devices can take place entirely in a direction from the panel support surface. This means that the user, who sits on the building, only needs to have access to the fastening devices from above. The user no longer needs to work under a plate or a profile, for example, for setting a nut, for example, in order to thus realise a fixation or a vertical adjustment. Fixation and vertical securing take place in one operation. Thus, a good accessibility is created, so that the mounting system can be installed on the building and be adjusted in less time.

In one embodiment the fixing profile part is provided with sidepieces that extend in a direction substantially transversely to the panel support surface, wherein the fastening devices and the sidepieces are designed for lateral engagement with each other. The sidepieces, or so-called side plates, provide a larger contact area between the fastening device and the fixing profile part. This leads to greater stability and a more solid fixation of the main profile.

In one embodiment, each one of the plurality of fastening devices comprises an elongate shank body, which is provided with a first screw thread, for example a self-tapping screw thread, on a part to be connected to the building or a part thereof, and which is provided with a second screw thread on a part connected to the fixing profile part. The first screw thread is designed for engagement with the building, or a part thereof, and the second screw thread is designed for engagement with the fixing profile part. Using nut on the second screw thread is not necessary, since the second screw thread is designed for direct engagement with the fixing profile part of the main profile. The first screw thread thus provides the fixation to the building, for example in that it engages in a purlin of the building or in an intermediate plate already attached thereto, as will be explained hereinafter. The second screw thread provides the fixation to the main profile, at the same time securing the vertical position thereof, for example in that the profile is provided with a tap thread, in which the second screw thread engages, or in that the second screw thread is self-tapping. Using this fastening device, it is therefore possible to obtain a dual function (fixing and securing the vertical position and the orientation) in one operation.

In one embodiment, the first screw thread and the second screw thread have at least substantially the same pitch. This makes it possible to realise an accurate fixation and securing of the vertical position without causing damage to the profile. The main profile is to that end maintained at the desired height, for example by using one or more supporting blocks, whereupon the fastening device can be screwed into the main profile and the building.

In one embodiment, the diameter of the second screw thread is larger than a diameter of the first screw thread. The second screw thread functions as a means of attachment for attaching the fastening device to the fixing profile part. The first screw thread, which is a self-tapping screw thread, for example, is used for attachment to the building, for example a wooden purlin of the building, and/or a thin-walled steel base, for example having a thickness of up to 5 mm, such as 3 mm. Because the diameter of the first screw thread is smaller than the diameter of the second screw thread, the first screw thread can be easily passed through a hole formed in the fixing profile part and subsequently come into engagement with the building. Upon further tightening, the second screw thread will at some point move in the direction of the fixing profile part and come into contact therewith. At that point the second screw thread will come into engagement with the fixing profile part, thereby fixing it in place and securing its vertical position. The embodiment having different diameters makes it possible to effect a fixation from the upper side of the main profile, which upper side is generally easily accessible to the user.

In one embodiment, the second screw thread has an increasing diameter, viewed from the first screw thread in the direction of the second screw thread. Preferably, the second screw thread initially has a diameter that corresponds to the diameter of the elongate shank body. The diameter of the second screw thread will increase in upward direction, i.e. in a direction away from the first screw thread. This means that, in the above-described method, a relatively thin part of the screw thread will initially come into contact with the hole in the fixing profile part. Upon further tightening, the diameter of the second screw thread will increase, so that the second screw thread will gradually come into engagement with the edges of the hole in the fixing profile part. In this way a gradual engagement of the second screw thread with the fixing profile part is obtained, therefore. The fastening device readily cuts into the slightly smaller bore of the fixing profile part with the conical second screw thread. The fixing profile part may furthermore be provided with side plates, in which the fastening device can engage in a self-tapping manner. In that case the fastening device will also cut into the side plates, resulting in greater stability. Tests have shown that the stability and the pull-out values of the screw are increased by 25% to 50%. The side plates increase the pull-out values of the screw. It is noted in this regard that the diameter of the second screw thread need not increase along the entire length thereof, but that it is also possible for only part of the screw thread to have an increasing diameter, followed by a part with a constant diameter of the screw thread adapted to the hole in the fixing profile part.

The fastening device may be made of stainless steel, for example, and the profile may be made of aluminium.

In one embodiment, the second screw thread comprises one or more interruptions in the screw thread. Because of the presence of these interruptions in the screw thread, i.e. interruptions in the protrusions, any material removed from the fixing profile part can be carried off in a simple manner. In addition to that, the interruptions provide increased resistance against unscrewing. The interruptions are preferably provided on a part of the second screw thread which is located relatively closer to the first screw thread. These interruptions may for example be provided in an outwardly tapering part of the second screw thread as described above, and for example be absent precisely in the part with the constant diameter.

In one embodiment, the plurality of fastening devices are arranged in spaced-apart relation in a direction parallel to the plane defined by the support surface, in particular in a longitudinal direction of the main profile and/or a direction transversely thereto. When two fastening devices are used, for example, which are provided at two opposite ends of the main profile, for example, it is possible to obtain an improved securing effect. When three fastening devices are used, for example, a precise placement and orientation in a desired plane becomes possible. The use of further fastening devices is conceivable, of course, in which case said further fastening devices will provide a more solid fixation of the main profile to the building.

It is conceivable in that regard for the main profile to comprise an additional fixing profile part, in which one or more of the plurality of fastening devices can be placed. The additional fixing profile part is preferably disposed spaced from the fixing profile part in a direction substantially parallel to the plane defined by the support surface and also in a direction substantially transversely to the longitudinal direction of the main profile. This increases the distance between the plurality of fastening devices, so that a more precise and more stable placement is possible. The additional fixing profile part may be configured similarly to the fixing profile part already described in the foregoing.

In a specific embodiment, the main profile comprises an additional support profile part which is designed for at least partially defining an additional panel support surface, on which at least one additional photovoltaic panel can be placed, wherein the main profile comprises the additional fixing profile part disposed between the building and the additional panel support surface, wherein some of the plurality of integrally formed fastening devices can engage with the additional fixing profile part.

In a possible embodiment, the main profile comprises an L-shaped (in cross-sectional view) profile part, wherein the base of the "L" forms at least part of the panel support surface. Such an L-shaped profile part is relatively easy to produce and forms an ideal profile part for supporting the photovoltaic panel. The L-shaped profile part thus forms the support profile part in this case.

In one embodiment, a leg of the "L" extends from the base, at an angle thereto, in a direction away from the building. The leg thus preferably extends in upward direction. The leg of the "L" bounds edges of the panel support surface.

In one embodiment, the angle is 90°, with the leg of the "L" forming a stop surface which bounds the panel support surface. Thus it becomes possible to place the photovoltaic panel in close abutment with the leg of the "L", for example. It is very advantageous in that regard that fixing and securing the vertical position can take place in a simple manner by means of the fastening devices, so that the L-shaped profile part can be fixed and correctly aligned in a quick and simple manner and a correct abutment between the photovoltaic panel and the profile part is obtained.

In one embodiment, the leg of the "L" extends to above an upper side of the photovoltaic panel in an installed position of the photovoltaic panel. It is also conceivable in that regard for the panel to extend up to the upper side of the photovoltaic panel. It is conceivable in this case for the photovoltaic panel to be in close abutment with the leg of the "L" of the main profile, in line therewith. This makes it possible to provide a watertight barrier, for example of rubber, at the upper side between the main profile and the photovoltaic panel.

The photovoltaic panel can be connected to the mounting system in a simple manner if the main profile is provided with a hook-shaped profile part on a side remote from the building, in which profile part a clamping element can be placed for connecting the photovoltaic panel to the main profile therewith. Said hook-shape profile part is preferably disposed above the leg of the "L", laterally spaced therefrom.

It is important that condensation water or other moisture, such as rain water seeping through, can be drained in a simple and efficient manner. In one embodiment, the mounting system therefore comprises a U-shaped gutter profile part in the main profile, which gutter profile part is disposed under the panel support surface for draining moisture, such as condensation water or rain water that has seeped through.

A compact the system is obtained if a first leg of the "U" is connected to the support profile part.

In another compact embodiment, a second leg of the "U" is connected to the fixing profile part.

The above makes it clear that the L-shaped profile part can directly blend into a U-shaped profile part and subsequently directly blend into the fixing profile part.

To further strengthen the mounting system, it is conceivable that the mounting system comprises a cross profile which can be placed between the main profile and the further main profile.

Said cross profile can be used in an efficient manner for draining moisture, such as condensation water, if said cross profile comprises a U-shaped (in cross-sectional view) gutter profile part which leads to the U-shaped gutter profile part of the main profile.

The main profile can furthermore be used in an efficient manner as a support for at least two photovoltaic panels to be placed beside each other if the main profile is substantially mirror-symmetrical, seen in cross-sectional view. The symmetry is a left-right symmetry in that case. The mounting system in that case comprises two support profile parts disposed beside each other, which are L-shaped and, for example, wherein the legs of the "L" extend parallel to each other and wherein the base of the "L" extend in different directions from the leg of the "L" relative to each other. Between the base of the "L" and the building, the fixing profile parts are provided on either side of the main profile. Said fixing profile parts are preferably laterally spaced from the base of the "L", in such a manner that a good accessibility is provided. Each of the fixing profile parts can be directly connected to the building by means of a fastening device, whilst it is still possible to secure the vertical position of the support profile part by means of the fastening device.

According to an aspect of the invention, a building is provided on which a mounting system as described in the foregoing is installed.

In one embodiment, the building comprises a sloping upper side on which the mounting system is provided, wherein the main profile extends in the direction of the gradient of the upper side. The main profile thus extends from the top down.

The building may for example be a house, a livestock building, a shed, a carport or the like, and the mounting system is preferably fixed to the roof of the building. In a special embodiment, the mounting system itself, in combination with at least one photovoltaic panel, forms the roof of the building. In particular an embodiment in which a watertight barrier is provided between the main profile and the at least one photovoltaic panel is suitable for this purpose.

The mounting system is also suitable for outer wall use, however, in which case the panel is to be installed on the outside wall of the building.

According to an aspect of the invention, there is provided a set of parts for forming a building as described above. Said set of parts comprises one or more of the parts already explained in the foregoing of the mounting system as described above.

In one embodiment, the set of parts comprises at least two main profiles as well as a plurality of fastening devices.

Additionally, the set of parts may comprise at least one cross profile.

According to an aspect of the invention, there is provided a method for installing a photovoltaic panel on a building, the method comprising the step of providing a mounting system according to the invention, wherein the method comprises the steps of:
- placing the main profile in a desired orientation and with a desired spacing relative to the building;
- bringing the fastening device into engagement both with the fixing profile part and with the building for securing the vertical position of the main profile relative to the building;
- placing the photovoltaic panel on the support profile part.

According to the invention, the method comprises the step of bringing at least three fastening devices spaced from each other in a direction substantially parallel to the plane defined by the support surface into direct engagement both with the fixing profile part and/or the additional fixing profile part and with the building by operating the fastening devices substantially entirely in a direction from the panel support surface for securing the desired orientation as well as the desired vertical position of the main profile relative to the building.

It is conceivable in that regard to maintain the desired spacing for the main profile by means of an accessory. Said accessory may be a supporting block, for example.

Using the method, a mounting system provided with a photovoltaic panel can be installed in a simple and efficient manner.

The invention will now be explained in more detail with reference to a few figures, in which:
Figure 1 is a cross-sectional view of the main profile for a mounting system according to the present invention;
Figure 2 is a cross-sectional view of the cross profile for the mounting system according to the present invention;
Figure 3 is a side view of a fastening device for use in the mounting system according to the present invention;
Figure 4 is a cross-sectional view of the main profile in an installed position and a photovoltaic panel in mounted position;
Figure 5 is a cross-sectional view of the main profile in an installed position;
Figure 6 is a perspective view showing a method for installing a mounting system on a building, using an intermediate plate.

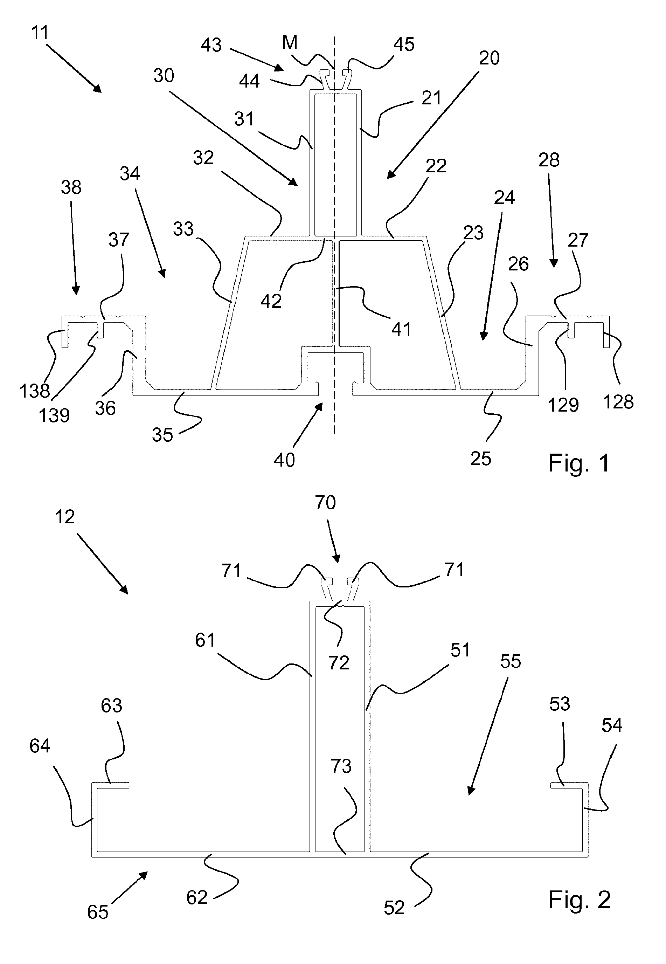

Figure 1 shows a cross-section of the main profile 11 of a mounting system according to the present invention for installing a photovoltaic panel on a building. The main profile is configured substantially mirror-symmetrically around a central axis M. Such a configuration is not necessary, however. The main profile comprises a number of profile parts 20, 24, 38 on a right-hand side as well as a number of profile parts 30, 34, 38 on a left-hand side. Located close to the central axis M is an L-shaped profile part 20, 30 having a base 22, 32 and a leg 21, 31 of the "L". The base 22, 32 of the "L" forms a support surface on which the photovoltaic panel is to be placed either directly or indirectly. Connected to the base is a U-shaped profile part 24, 34. Said profile part 24, 34 is connected to the base 22, 32 of the "L", viz. to the end remote from the leg 21, 31 of the "L". This U-shaped profile part comprises a sloping wall 24, 34, a base 25, 35 and an upright wall 26, 36. The first leg 23, 33 of the "U" connects the base 22, 32 of the "L" to the base 25, 35 of the "U". The second leg 26, 36 extends upward from the base. At the upper side of said second leg 26, 36, a fixing profile part 28, 32 in the form of a fixing plate 27, 37 extends further outward. It is noted in this connection that two fixing profile parts 28, 38 are provided in the illustrated embodiment, viz. a fixing profile part 28 and an additional fixing profile part 38, which can be simply referred to as fixing profile parts 28, 38 herein for the sake of clarity. Because of the mirror-symmetrical configuration, that which applies to the fixing profile part 28 can also apply to the additional fixing profile part 38. The same obtains as regards the other identical parts of the main profile 11. In the illustrated embodiment, the fixing plate 27, 37 is substantially parallel to the base 22, 32 of the "L". Side plates, i.e. plate parts 128, 129, 138, 139, are provided, which side plates extend substantially transversely to the panel support surface 32 and which perform a strengthening function together with the fastening device (not shown), as will be explained hereinafter.

At the upper side of the main profile a hook shaped element, globally indicated at 43, is provided. Said hook-shaped element can be used for clamping the photovoltaic panel to the main profile 11, making use of a clamping element (not shown). Near the central axis, profile parts 41, 42 are furthermore provided, which function to strengthen the main profile and which impart stiffness to the profile under the panel. Provided at a bottom side of the main section is a receiving hole 40, which can be used for placing a bolt and a nut therein, if desired, in order to effect a pre-fixation or for hanging a lamp, electric equipment or a gutter or the like therefrom. It is also possible to connect a gutter thereto.

Figure 2 shows a cross-section of a cross profile for a mounting system according to the present invention. This cross system can be mounted between two main profiles 11. It preferably extends substantially in transverse direction to the main profile. The cross profile 12 is likewise configured substantially mirror-symmetrically, although this is not necessary. It is for example conceivable to use only one side of the cross profile 12 shown here. Such a cross profile could be used as an edge profile. On the right-hand side the cross profile 12 comprises a substantially U-shaped gutter 55, which consists of a base 52, two upright walls 51, 54 and a flanged edge 53. A U-shaped gutter section 65 is formed on the left-hand side as well, which gutter section consists of two upright walls 61, 64 that extend from a base 62, the outermost wall 64 of which has an inwardly extending wallpart 63. Connecting pieces 72, 73 are provided near the central axis of the cross profile 12, and hook-shaped edges 71 are present again at an upper side.

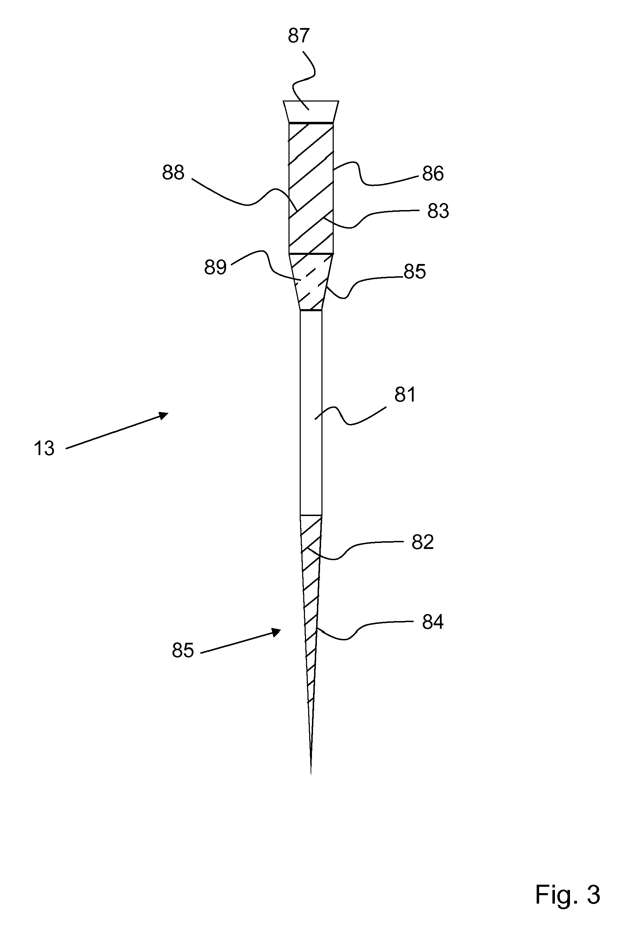

Figure 3 shows a side view of a fastening device 13 for the mounting system according to the present invention. Said fastening device is placeable on the fixing profile part of the main profile as shown in figure 1. The fastening device comprises an elongate shank body 81, which is provided with a first screw thread 82 at a bottom side and with a second screw thread at an upper side. The first screw thread 82 in this case comprises a self-tapping thread 84. The second screw thread 83 comprises a second thread 88, which has the same pitch as the first thread. The second screw thread 83 tapers outward toward the upper side from the first screw thread 82. At the location of the shank body 81, the second screw thread thus has a diameter which is approximately the same as the diameter of the shank body 81, and the diameter of the screw thread 83 gradually increases toward the upper side. Thus there is a part 85 in which the diameter of the screw thread increases. At the upper side, in a part 86 of the screw thread 83, the diameter is constant. In the tapered part 85 of the second screw thread 83 the thread 88 exhibits a number of interruptions 89. At the upper end 87 of the fastening device 13, an operating element 87 in the form of a cavity formed in the end is provided, which cavity is capable of receiving a head of a screwdriver or a socket wrench. The operating element thus makes it possible to screw the fastening device 13 in and/or out. To prevent unwanted removal of the fastening device, a specific shape may be selected for the cavity, so that the fastening device can only be operated by means of specific tools or keys.

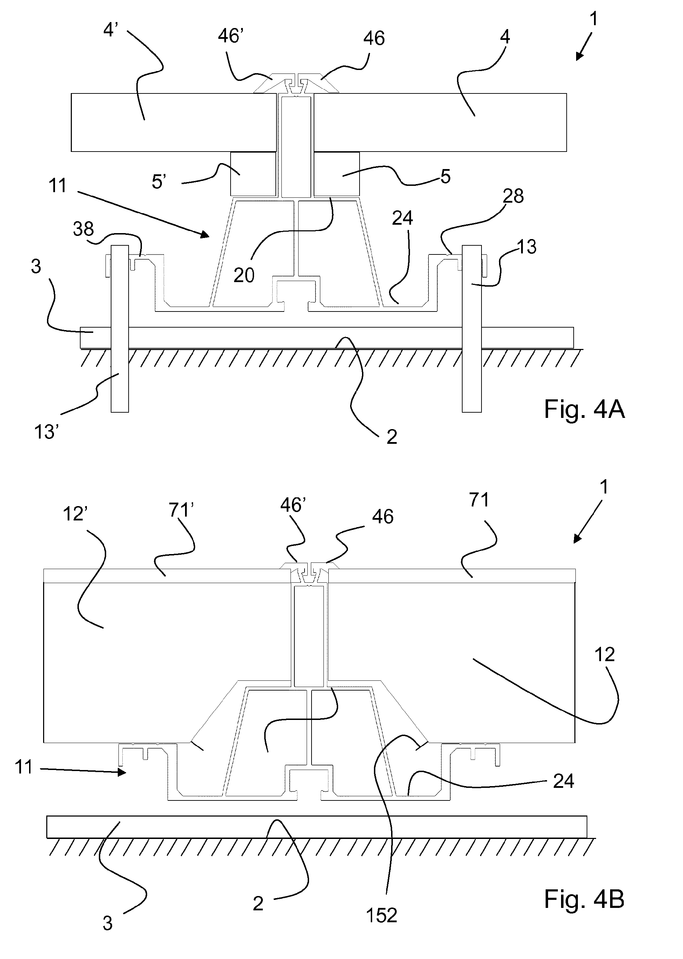

Figure 4a shows a cross-sectional view of a main profile 11 in an installed position of the system 1. The main profile is fixed to a building 2 in that the fastening device 13 is screwed into the building 2 with its first screw thread and into the fixing profile part 38 with its second screw thread. Conceivably, an insulating layer 3 is provided between the building and the main profile 12, although this is not necessary. The photovoltaic panel is placed on the L-shaped profile part 20 via an intermediate plate 5 in the illustrated embodiment. It is not necessary to use this intermediate plate 5, however, its use depending on the type of panel to be placed. As shown, the fixing profile part 38 is located between the building 2 and the panel support surface in this installed position, which panel support surface is formed by the base of the L-shaped profile part 20 in this case. Present between the support profile part 20 and the fixing part 38 is the U-shaped profile part 24. Said profile part 24 is provided under the photovoltaic panel and enables the drainage of condensation water or other moisture.

Figure 4b shows a cross-sectional view of the mounting system 1 at another axial position of the main profile 11. The figure also shows a longitudinal sectional view of the cross profile 12. The cross profile is provided with a recess at one end, such that the end piece can be placed on or near the panel support surface and the bottom side of the cross profile can be placed on the fixing profile part 38. The hook-shaped edges 43, 70 of the main profile 11 and the cross profile 12, respectively, are located at the same height. They bound the edges of the photovoltaic panel, so that said photovoltaic panels can be easily mounted in place using hook means. The recess in the cross profile is provided in such a manner that one end of the cross profile, at the bottom side thereof, terminates in the U-shaped gutter 24 of the main profile. This means that condensation water or other moisture can be led to the U-shaped gutter 24 via the cross profile.

After the main profile, the cross profile and the photovoltaic panels have been fixed in place, a watertight barrier is conceivably provided at the upper side, for example through the use of a layer of a material such as rubber or a metal at the transition between the hook parts 43, 70 and the photovoltaic panel 4.

As has become apparent in the foregoing, the main profile can be fixed to the building 2 in a quick and simple manner by means of the fastening device and subsequently also be maintained at the desired height and the desired angle of inclination in that the fastening device is in direct engagement with the fixing profile part and the building. Using the mounting system according to the present invention, it is thus makes relatively easy to install a photovoltaic panel on a building.

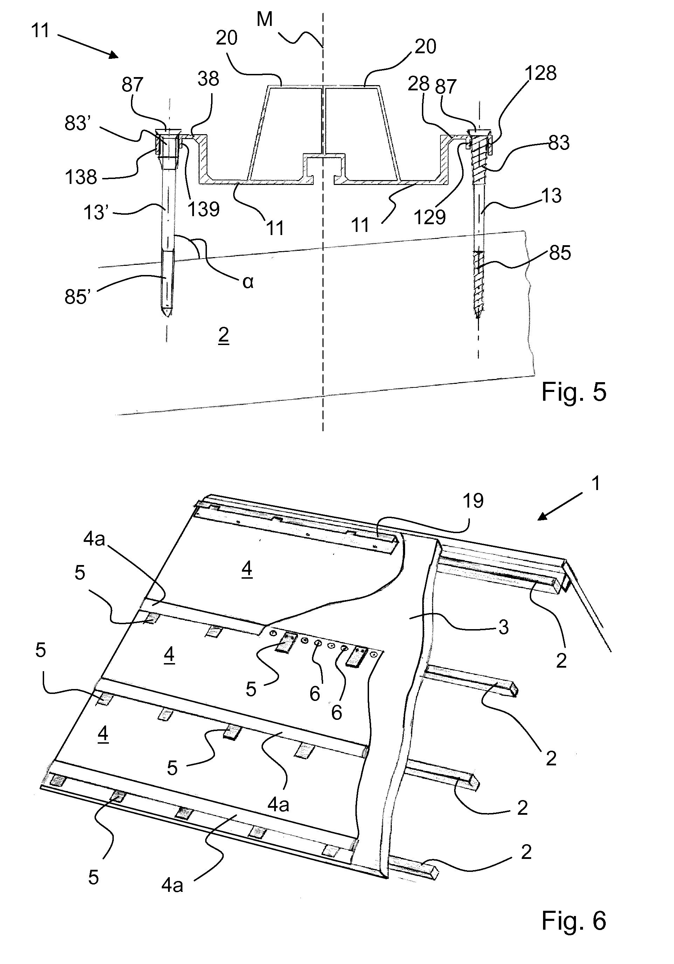

Figure 5 is a sectional view of the main profile in installed position on the roof 2. The fastening devices 13, 13', also shown in figure 3, are screwed into the fixing profile parts 28, 38 of the main profile via the second screw thread 87, 87'. The first screw thread 85, 85' of the fastening device 13, 13' is screwed into a sloping purlin 2 of the roof construction, for example. As the figure shows, the main profile is disposed substantially horizontally, so that the main profile extends at an angle α with the purlin 2. The angle α can be determined in that the main profile is kept in place, whereupon the fastening devices 13, 13' are screwed into the profile. The relatively thin part of the fastening device 13, 13' can to that end be passed through a hole provided in the fixing profile part 28, 38, whereupon it will engage the purlin 2 to be screwed into said purlin in a self-tapping manner. Approximately simultaneously therewith, the relatively thick part 83, 83' of the fastening device 13, 13' will come into contact with the side plates 128, 129, 138, 139, which extend from the horizontal part of the fixing profile part 28, 38, substantially perpendicular thereto, toward a bottom side of the main profile 11. The second screw thread 83, 83' will then come into self-tapping engagement with said side plates 128, 129, 138, 139. The fastening device thus provides a solid connection between the building and the main profile, which can be realised in a simple manner.

It is conceivable to use the mounting system for installing the photovoltaic panel on an existing roof of the building. This is a so-called on-roof installation. In-roof installation is also possible with the mounting system according to the present invention. The mounting system is in that case used for installing a photovoltaic panel or another panel, such as a transparent (glass) panel, on a building, realising a roof construction comprising said photovoltaic panel in the installed position. Such an in-roof system leads to a considerable saving in weight in comparison with already known systems.

Figure 6 shows a view of a roof construction 1, comprising a few purlins 2 on which a subroof 3 is provided. To obtain an adequate sealing effect it is preferred to use a method that will be explained in more detail with reference to figure 6. Installation can take place via an intermediate plate 5 to be fixed to the building 1 in the illustrated embodiment, which intermediate plate can be screwed on a purlin 2 or be fixed otherwise. Subsequently the fastening device 13 according to the invention is fixed to said intermediate plate 5. In the illustrated embodiment, respective lengths 4 of a roofing material are laid on the subroof, preferably from the bottom to the top, whilst a few intermediate plates 5 are attached to the upper side of each length 4, for example in regularly spaced relation, at the location of the purlins 2. Plastic (such as PVC) roofing may be used as the roofing material 4 both for flat roofs and for pitched roofs, which roofing material functions as an underlayer for obtaining a watertight barrier. Said plastic layer can be easily used around chimneys, dormers, domes and other special objects on the building 1.

After placement of the first, for example the lowermost, length of roofing material, another length 4 is placed thereabove, in such a manner that there is an overlap between a lower part 4a of said higher length and the upper part of the intermediate plates 5. In this way an adequate water barrier is obtained. Subsequently, a main profile 11 can be fixed to the intermediate plates 5, as already explained in the foregoing, with this exception that the screw thread of the fastening device 13 does not engage in the purlin 2 but, on the contrary, in the intermediate plate 5. The main profile preferably extends transversely to the purlins 2 in that case and thus extends from the top down. An end profile 19 may be provided at an upper side.

A general method for installing an in-roof mounting system according to the present invention thus comprises the steps of:
- Placing a roofing layer 4, 4a by unrolling the roll in horizontal direction and subsequently fixing the layer;
- Providing an overlap 4a between adjacent roofing layers 4 from the bottom upward, which overlap 4a is provided near a point of attachment 2 to the building, for example a purlin 2 of the roof;
- Attaching a mounting plate (intermediate plate 5) to the purlin 2, just below the overlap 4a;
- Securing the main profile 11 to the mounting plate (intermediate plate 5) by means of the fastening devices 13.

The skilled person will appreciate that the invention has been explained with reference to a few preferred embodiments in the foregoing. The invention is not limited to these embodiments, however. The protection sought is defined in the appended claims.

## Claims

1. A mounting system for installing a photovoltaic panel (4) on a building (2), the mounting system comprising an elongate main profile (11) to be fixed to the building (2) and a further elongate main profile to be placed substantially parallel to the main profile with a transverse spacing therebetween, wherein the main profile (11) comprises a support profile part (20) and wherein the further main profile comprises a further support profile part, wherein the support profile part (20) and the further support profile part define a panel support surface (22) on which one or more photovoltaic panels (4) can be placed, wherein the main profile (11) comprises a fixing profile part (28) disposed between the building and the panel support surface (22), wherein the mounting system further comprises a plurality of integrally formed fastening devices (13) that can be connected to the fixing profile part (28) in such a manner that the main profile (11) can be connected to the building (2) in spaced relation therewith, wherein the fastening devices (13) are designed for being operable essentially entirely in a direction from the panel support surface (22), and also for being in direct engagement both with the fixing profile part (28) and with the building (2) for thus securing the support profile part (20) of the main profile (11) in a desired orientation and with a desired spacing from the building.

2. A mounting system according to claim 1, wherein the fixing profile part (28) is provided with sidepieces (128, 129) extending in a direction substantially transversely to the panel support surface (22), wherein the fastening devices (13) and the sidepieces (128, 129) are designed for lateral engagement with each other

3. A mounting system according to claim 1 or 2, wherein each one of the plurality of fastening devices (13) comprises an elongate shank body (81), which is provided with a first screw thread (82) on a part to be connected to the building, and which is provided with a second screw thread (83) on a part connected to the fixing profile part, wherein the first screw thread (82) and the second screw thread (83) have substantially the same pitch, and wherein a diameter of the second screw thread is larger than a diameter of the first screw thread, and wherein the second screw thread (83) preferably has an increasing diameter, viewed from the first screw thread (82) in the direction of the second screw thread (83).

4. A mounting system according to any one of the preceding claims, wherein the plurality of fastening devices (13) are arranged in spaced-apart relation in a direction parallel to the plane defined by the support surface (22), in particular in a longitudinal direction of the main profile (11) and/or a direction transversely thereto.

5. A mounting system according to any one of the preceding claims, wherein the main profile (11) comprises an additional support profile part (30) which is designed for at least partially defining an additional panel support surface (32), on which at least one additional photovoltaic panel (4') can be placed, wherein the main profile (11) comprises an additional fixing profile part (38) disposed between the building (2) and the additional panel support surface (32), which additional fixing profile part is disposed spaced from the fixing profile part (28) in a direction substantially parallel to the panel support surface (22) and also in a direction substantially transversely to the longitudinal direction of the main profile (11), wherein some of the plurality of integrally formed fastening devices (13) can engage with the additional fixing profile part (38).

6. A mounting system according to any one of the preceding claims, wherein the main profile (11) comprises a profile part having an L-shaped cross-sectional view, wherein the base (22) of the "L" forms at least part of the panel support surface (22).

7. A mounting system according to claim 6, wherein a leg (21) of the "L" extends from the base (22), at an angle thereto, in a direction away from the building (2), wherein said angle is substantially 90°, wherein the leg of the "L" forms a stop surface (21) which bounds the panel support surface (22), and wherein the leg of the "L" extends to above an upper side of the photovoltaic panel (4) in an installed position thereof.

8. A mounting system according to any one of the preceding claims, wherein the main profile (11) is provided with a hook-shaped profile part (43, 45) on a side remote from the building (2), in which profile part a clamping element (46) can be placed for connecting the photovoltaic panel (4) to the main profile (11) therewith.

9. A mounting system according to any one of the preceding claims, wherein the main profile (11) comprises a gutter profile part (24) having a U-shaped cross-sectional view and which is disposed under the panel support surface (22) for draining moisture, such as condensation water, in particular wherein a first leg (23) of the "U" is connected to the support profile part (20) and wherein a second leg (26) of the "U" is connected to the fixing profile part (28).

10. A mounting system according to claim 9, wherein the mounting system comprises a cross profile (12) designed to extend between the main profile (11) and the further main profile, wherein said cross profile (12) comprises a gutter profile part (55) having a U-shaped cross-sectional view and which leads to the U-shaped gutter profile part (24) of the main profile.

11. A mounting system according to any one of the preceding claims, wherein the main profile (11) is substantially mirror-symmetrical, seen in cross-sectional view.

12. A building (2), comprising a mounting system according to any one of the preceding claims, which is installed thereon.

13. A building according to claim 12, wherein the building (2) comprises a sloping upper side on which the mounting system is provided, wherein the main profile (11) extends in the direction of the gradient of the upper side.

14. An assembly of parts for forming a building according to claim 12 or 13, comprising the parts of the mounting system according to any one of the preceding claims 1 - 11, in particular comprising at least two main profiles (11) and at least two cross profiles (12), as well as a multitude of fastening devices (13).

15. A method for installing a photovoltaic panel (4) on a building (2), comprising the step of providing a mounting system according to any one of claims 1 - 11, wherein the method comprises the steps of:
- placing the main profile (11) in a desired orientation and with a desired spacing relative to the building;
- bringing at least three fastening devices (13, 13') spaced from each other in a direction substantially parallel to the plane defined by the support surface into direct engagement both with the fixing profile part (28) and/or the additional fixing profile part (38) and with the building (2) by operating the fastening devices (13, 13') substantially entirely in a direction from the panel support surface (22) for securing the desired orientation as well as the desired vertical position of the main profile (11) relative to the building (2).
- subsequently placing the photovoltaic panel (4) on the support profile part (20).
